# EUROPÄISCHE PATENTSCHRIFT

(11) **EP 3 926 397 B1**
(45) Veröffentlichungstag und Bekanntmachung des Hinweises auf die Patenterteilung: **11.02.2026**
(21) Anmeldenummer: 21177762.8
(22) Anmeldetag: 04.06.2021
(51) Int. Cl.: G03B 15/03, G06T 5/00, H04N 13/254, H04N 13/25, G01C 11/02, G03B 35/08, G01C 3/02, G01C 3/14, H04N 13/239, H04N 13/296

(54) **STEREOSKOPISCHE KAMERA UND VERFAHREN ZU DEREN BETRIEB**
STEREOSCOPIC CAMERA AND METHOD FOR ITS OPERATION
CAMÉRA STÉRÉOSCOPIQUE ET SON PROCÉDÉS DE FONCTIONNEMENT

(30) Priorität: 18.06.2020 DE 102020207575
(43) Veröffentlichungstag der Anmeldung: 22.12.2021
(73) Patentinhaber: Pepperl+Fuchs SE, 68307 Mannheim (DE)
(72) Erfinder: LINNENKOHL, Jan, 12277 Berlin (DE)
(74) Vertreter: Fischer, Uwe

(56) Entgegenhaltungen:
- DE-A1- 102019 105 358
- GB-A- 2 468 138
- US-A1- 2015 358 604
- US-A1- 2017 291 548
- XIA WENYAO ET AL: "A Global Optimization Method for Specular Highlight Removal From a Single Image", IEEE ACCESS, vol. 7, 3 September 2019 (2019-09-03), pages 125976 - 125990, XP011745861, DOI: 10.1109/ACCESS.2019.2939229

## Beschreibung

Die Erfindung bezieht sich auf eine stereoskopische Kamera mit zumindest zwei Kameraeinheiten, die jeweils entlang einer kameraeigenen optischen Achse ausgerichtet sind, und einer Beleuchtungseinrichtung zur Beleuchtung zu fotografierender Objekte. Bei herkömmlichen stereoskopischen Kameras ist eine Beleuchtungseinrichtung mit einer einzigen Beleuchtungseinheit üblicherweise mittig zwischen den Kameraeinheiten angeordnet, um für beide Kameraeinheiten eine vergleichbare Objektausleuchtung zu gewährleisten.

Die Druckschrift US 2015/0358604 A1 offenbart eine Kamera mit den Merkmalen gemäß dem Oberbegriff des Anspruchs 1 und ein Verfahren mit den Merkmalen gemäß dem Oberbegriff des Anspruchs 11. Die Druckschrift DE 10 2019 105358 A1 zeigt eine ähnliche Offenbarung.

Die Veröffentlichung "A Global Optimization Method for Specular Highlight Removal From a Single Image" (Xia Wenyao, Chen Elvis C S, Pautler Stephen E, Peters Terry M; IEEE Access IE-EE, USA; Vol:7, Page(s): 125976 - 125990) offenbart ein Verfahren zum Eliminieren von Direktreflexen.

Bei der Auswertung stereoskopischer Bilder beziehungsweise bei der Auswertung von Bilderpaaren besteht das Problem, dass eine direkte Reflexion von Licht der Beleuchtungseinrichtung, nachfolgend zur Abgrenzung von diffus zurückgestreuter Strahlung Direktreflex genannt, in den zwei Bildern eines Bilderpaares an zwei unterschiedlichen Stellen auftreten kann und somit eine frontal beleuchtete, reflektierende Stelle eines Objekts die stereoskopische Auswertung, beispielsweise in Form einer Abstandsmessung, für zwei unterschiedliche Bildstellen wegen Überbelichtung stören kann.

Der Erfindung liegt die Aufgabe zugrunde, eine stereoskopische Kamera anzugeben, bei der negative Effekte von Direktreflexen, die durch Reflexion von Beleuchtung der Beleuchtungseinrichtung erzeugt werden, reduziert werden können.

Diese Aufgabe wird erfindungsgemäß durch eine stereoskopische Kamera mit den Merkmalen gemäß Patentanspruch 1 gelöst. Vorteilhafte Ausgestaltungen der erfindungsgemäßen Kamera sind in Unteransprüchen angegeben.

Ein wesentlicher Vorteil der erfindungsgemäßen stereoskopischen Kamera ist darin zu sehen, dass durch die erfindungsgemäße Ausrichtung der optischen Achsen und der Beleuchtung und dem erfindungsgemäßen Ansteuern der Beleuchtungseinheiten bei der Bildaufnahme erreicht werden kann, dass Direktreflexe, die auf einer Reflexion der Beleuchtung der Beleuchtungseinheiten beruhen, zumindest näherungsweise in denselben Bildabschnitten der Bilder beider Kameraeinheiten auftreten, sodass die Anzahl an Bildabschnitten, die aufgrund einer Überbelichtung nicht weiter auswertbar sind, minimiert wird. Mit anderen Worten macht sich die erfindungsgemäße Vorgehensweise bei der Ansteuerung der Beleuchtungseinheiten die Idee zunutze, dass bei einem gezielten Übereinanderlegen von Direktreflexen in Bildern beider Kameraeinheiten die Anzahl der nicht verwertbaren Direktreflexzonen in den Bilderpaaren reduziert wird, sodass der bilderpaarbezogene Verlust an Informationen reduziert wird.

Die Steuereinrichtung ist vorzugsweise derart ausgestaltet, dass sie Bilderpaare erzeugt, die jeweils ein erstes Bild und ein zweites Bild umfassen, wobei die Steuereinrichtung bei Aufnahme des ersten Bildes jedes Bilderpaares die erste Kameraeinheit und die zweite Beleuchtungseinheit aktiviert und die erste Beleuchtungseinheit deaktiviert oder deaktiviert lässt und bei Aufnahme des zweiten Bildes des Bilderpaares die zweite Kameraeinheit und die erste Beleuchtungseinheit aktiviert und die zweite Beleuchtungseinheit deaktiviert oder deaktiviert lässt.

Die Achse der Hauptstrahlkeule der ersten Beleuchtungseinheit ist vorzugsweise parallel, oder zumindest näherungsweise parallel mit einem Fehlwinkel von maximal 10°, zur optischen Achse der ersten Kameraeinheit ausgerichtet.

Die Achse der Hauptstrahlkeule der zweiten Beleuchtungseinheit ist vorzugsweise parallel, oder zumindest näherungsweise parallel mit einem Fehlwinkel von maximal 10°, zur optischen Achse der zweiten Kameraeinheit ausgerichtet.

Bezüglich der Anordnung relativ zu den Kameraeinheiten wird es als vorteilhaft angesehen, wenn der Abstand zwischen der ersten Beleuchtungseinheit und der ersten Kameraeinheit kleiner ist als der Abstand zwischen der ersten Beleuchtungseinheit und der zweiten Kameraeinheit und der Abstand zwischen der zweiten Beleuchtungseinheit und der zweiten Kameraeinheit kleiner ist als der Abstand zwischen der zweiten Beleuchtungseinheit und der ersten Kameraeinheit.

Bei einer bevorzugten Ausgestaltung ist vorgesehen, dass die erste Beleuchtungseinheit außen an oder innerhalb der ersten Kameraeinheit montiert ist und die Achse der Hauptstrahlkeule der ersten Beleuchtungseinheit parallel zur optischen Achse der ersten Kameraeinheit ausgerichtet ist, und die zweite Beleuchtungseinheit außen an oder innerhalb der zweiten Kameraeinheit montiert ist und die Achse der Hauptstrahlkeule der zweiten Beleuchtungseinheit parallel zur optischen Achse der zweiten Kameraeinheit ausgerichtet ist.

Bei einer anderen bevorzugten Ausgestaltung ist vorgesehen, dass die Achse der Hauptstrahlkeule der ersten Beleuchtungseinheit mit der optischen Achse der ersten Kameraeinheit zusammenfällt, und die Achse der Hauptstrahlkeule der zweiten Beleuchtungseinheit mit der optischen Achse der zweiten Kameraeinheit zusammenfällt.

Auch ist es vorteilhaft, wenn die Kamera einen ersten Spiegel aufweist, der die Strahlung der ersten Beleuchtungseinheit durch eine Ausgangslinse der ersten Kameraeinheit leitet und/oder in die optische Achse hineinspiegelt, wenn die Steuereinrichtung eine Bildaufnahme mit der zweiten Kameraeinheit auslöst, und die Kamera einen zweiten Spiegel aufweist, der die Strahlung der zweiten Beleuchtungseinheit durch eine Ausgangslinse der zweiten Kameraeinheit leitet und/oder in die optische Achse hineinspiegelt, wenn die Steuereinrichtung eine Bildaufnahme mit der ersten Kameraeinheit auslöst.

Die Spiegel können innerhalb der ihnen zugeordneten Kameraeinheit integriert, also in deren Gehäuse untergebracht sein, oder außerhalb der ihnen zugeordneten Kameraeinheit angeordnet sein.

Die Kamera weist vorzugsweise eine Bildauswertungseinrichtung auf, die mit den von den Kameraeinheiten erzeugten Bildern, insbesondere Bilderpaaren, eine dreidimensionale Tiefenkarte erzeugt.

Zusätzlich zu der ersten und zweiten Kameraeinheit können bei bevorzugten Ausführungsformen ein oder mehr weitere Kameraeinheiten vorhanden sein, denen jeweils eine Beleuchtungseinheit der Beleuchtungseinrichtung zugeordnet ist, wobei sich die Strahlung, insbesondere die Strahlung der Hauptstrahlkeule, der weiteren Beleuchtungseinheiten jeweils mit der optischen Achse der zugeordneten weiteren Kameraeinheit überlappt.

Insbesondere bei der letztgenannten Ausführungsform ist es vorteilhaft, wenn die Steuereinrichtung durch Ansteuerung der Kameraeinheiten und Beleuchtungseinheiten Bilderpaare erzeugt, die jeweils ein erstes Bild und ein zweites Bild umfassen, wobei das erste Bild jedes Bilderpaares mit einer der Kameraeinheiten bei Beleuchtung durch eine einer anderen Kameraeinheit zugeordneten Beleuchtungseinheit erzeugt wird und das zweite Bild mit der letztgenannten anderen Kameraeinheit bei Beleuchtung mit derjenigen Beleuchtungseinheit, mit der das erste Bild des Bilderpaares erzeugt wurde, erzeugt wird.

Die Erfindung bezieht sich darüber hinaus auf ein Verfahren zum Erzeugen stereoskopischer Bilder gemäß Anspruch 11.

Bezüglich der Vorteile des erfindungsgemäßen Verfahrens sowie vorteilhafter Ausgestaltungen des erfindungsgemäßen Verfahrens sei auf die obigen Ausführungen im Zusammenhang mit der stereoskopischen Kamera sowie deren vorteilhafter Ausgestaltungen verwiesen.

Die Erfindung wird nachfolgend anhand von Ausführungsbeispielen näher erläutert; dabei zeigen beispielhaft
- Figur 1: Bestandteile eines Ausführungsbeispiels für eine stereoskopische Kamera in einer schematischen Draufsicht,
- Figur 2: zwei Kameraeinheiten der stereoskopischen Kamera gemäß Figur 1 für sich allein,
- Figur 3: zwei Beleuchtungseinheiten der stereoskopischen Kamera gemäß Figur 1 für sich allein,
- Figur 4: die stereoskopische Kamera gemäß Figur 1 bei der Bildaufnahme durch eine der zwei Kameraeinheiten,
- Figur 5: die stereoskopische Kamera gemäß Figur 1 bei der Bildaufnahme durch die andere der zwei Kameraeinheiten,
- Figur 6: diffuse Streuung und einen Direktreflex im Falle einer Beleuchtung durch die eine der zwei Beleuchtungseinheiten der stereoskopischen Kamera gemäß Figur 1,

- Figur 7: eine schematische Seitenansicht einer bevorzugten Ausgestaltung, bei der Keulenachsen der Beleuchtungseinheiten parallel zu optischen Achsen zugeordneter Kameraeinheiten angeordnet sind und die Beleuchtungseinheiten außen an ihren zugeordneten Kameraeinheiten angeordnet sind,
- Figur 8: die Ausgestaltung gemäß Figur 7 in einer Draufsicht,
- Figur 9: eine schematische Seitenansicht einer bevorzugten Ausgestaltung, bei der Keulenachsen der Beleuchtungseinheiten parallel zu optischen Achsen zugeordneter Kameraeinheiten angeordnet sind und die Beleuchtungseinheiten innerhalb der ihnen zugeordneten Kameraeinheiten integriert sind,
- Figur 10: die Ausgestaltung gemäß Figur 9 in einer Draufsicht,
- Figur 11: eine schematische Seitenansicht einer bevorzugten Ausgestaltung, bei der Beleuchtungseinheiten mehrere, ringförmig angeordnete Subbeleuchtungseinheiten aufweisen,
- Figur 12: die Ausgestaltung gemäß Figur 11 in einer Draufsicht,
- Figur 13: eine schematische Seitenansicht einer bevorzugten Ausgestaltung, bei der Keulenachsen der Beleuchtungseinheiten mit optischen Achsen zugeordneter Kameraeinheiten zusammenfallen, und
- Figur 14: eine schematische Seitenansicht einer anderen bevorzugten Ausgestaltung, bei der Keulenachsen der Beleuchtungseinheiten mit optischen Achsen zugeordneter Kameraeinheiten zusammenfallen.

In den Figuren werden für identische oder vergleichbare Komponenten stets dieselben Bezugszeichen verwendet.

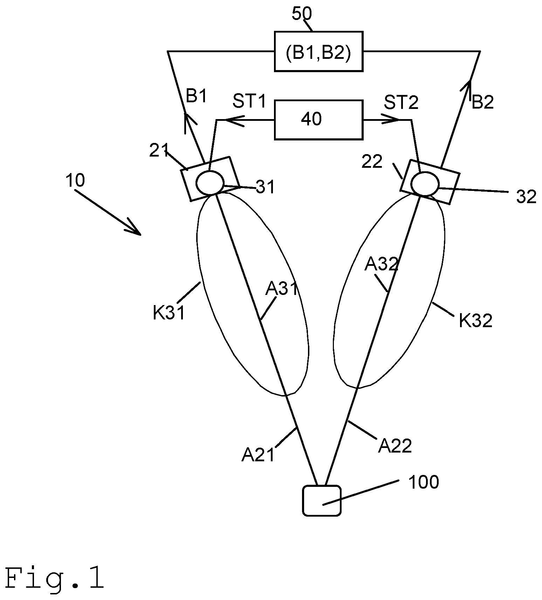

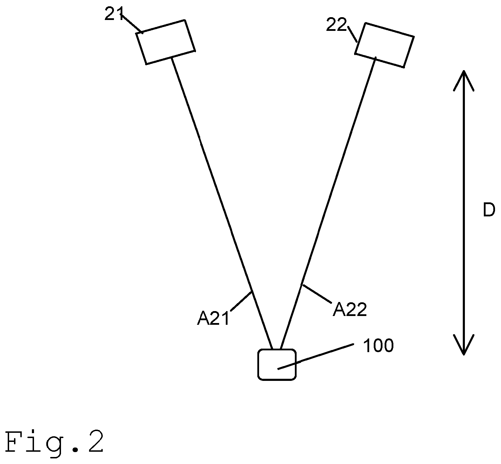

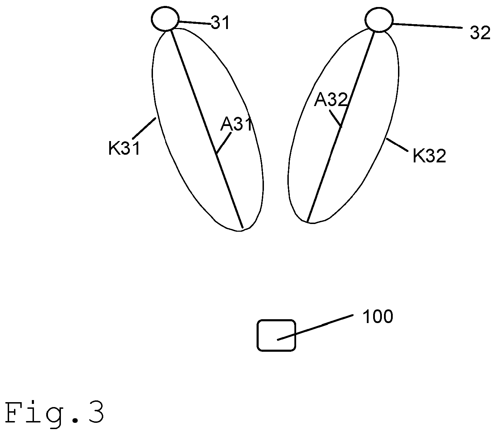

Die Figur 1 zeigt ein Ausführungsbeispiel für eine stereoskopische Kamera 10, die unter anderem eine erste Kameraeinheit 21 und eine zweite Kameraeinheit 22, die in der Figur 2 für sich allein dargestellt sind, und eine erste Beleuchtungseinheit 31 und eine zweite Beleuchtungseinheit 32, die für sich allein in der Figur 3 dargestellt sind, umfasst.

Die Figur 2 zeigt die zwei Kameraeinheiten 21 und 22 der stereoskopischen Kamera 10 gemäß Figur 1 für sich allein. Es lässt sich erkennen, dass die beiden Kameraeinheiten 21 und 22 jeweils entlang einer kameraeigenen optischen Achsen A21 bzw. A22 ausgerichtet sind. Die kameraeigenen optischen Achsen A21 bzw. A22 sind im Wesentlichen parallel ausgerichtet, sie weisen einen nur kleinen Kippwinkel, der in den Figuren aus Gründen der Übersicht übertrieben groß dargestellt ist, zueinander auf, der auf den Abstand D zu Bildobjekten 100, die mit der stereoskopischen Kamera 10 gemäß Figur 1 aufgenommen werden sollen, abgestimmt ist. Der Kippwinkel zwischen den optischen Achsen A21 und A22 kann so gewählt werden, wie dies bei herkömmlichen stereoskopischen Kameras der Fall ist.

Die Figur 3 zeigt die beiden Beleuchtungseinheiten 31 und 32 der stereoskopischen Kamera 10 gemäß Figur 1 näher im Detail. Es lässt sich erkennen, dass die beiden Beleuchtungseinheiten 31 und 32 jeweils keulenförmige Strahlung erzeugen; die Keulenachsen der Hauptstrahlkeulen K31 und K32 tragen die Bezugszeichen A31 und A32.

Wieder zurückkommend auf die Figur 1 lässt sich die Anordnung der Keulenachsen A31 und A32 relativ zu den optischen Achsen A21 und A22 erkennen. Man sieht, dass diese in der Draufsicht gemäß Figur 1 jeweils paarweise aufeinanderliegen, also paarweise identisch ausgerichtet sind oder parallel zueinander angeordnet sind.

Die Figur 1 zeigt darüber hinaus eine Steuereinrichtung 40, die mit den beiden Kameraeinheiten 21 und 22 und den beiden Beleuchtungseinheiten 31 und 32 in Verbindung steht und diese ansteuern kann. Eine Bildauswertungseinrichtung 50 der stereoskopischen Kamera 10 dient zum Auswerten von Bildern B1 und B2, die von den beiden Kameraeinheiten 21 und 22 geliefert werden und Bilderpaare bilden.

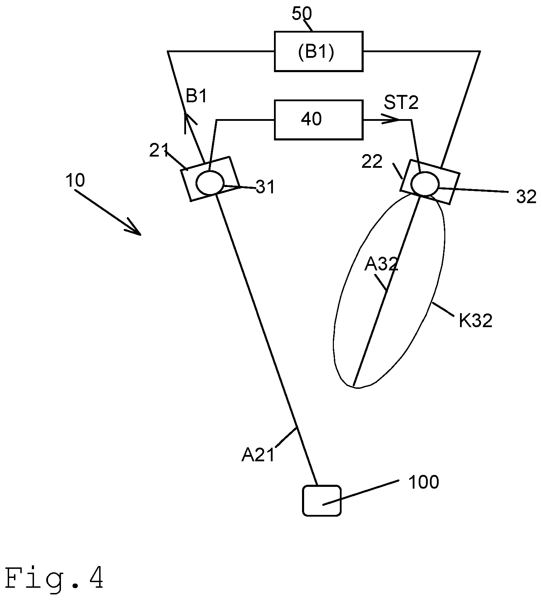

Die Steuereinrichtung 40 ist bei der stereoskopischen Kamera 10 gemäß Figur 1 derart ausgestaltet, dass sie mit den beiden Kameraeinheiten 21 und 22 jeweils nacheinander Bilder B1 und B2 aufnimmt:
Bei Aufnahme eines ersten Bildes B1 mit der ersten Kameraeinheit 21 wird die Steuereinrichtung 40 mit einem Steuersignal ST2 die zweite Beleuchtungseinheit 32 aktivieren und mit dieser das aufzunehmende Objekt 100 beleuchten (siehe Figur 4). Die Beleuchtung bei der Aufnahme des ersten Bildes B1 seitens der ersten Kameraeinheit 21 erfolgt also nicht mit der der ersten Kameraeinheit 21 zugeordneten ersten Beleuchtungseinheit 31, sondern stattdessen mit anderen bzw. der zweiten Beleuchtungseinheit 32.

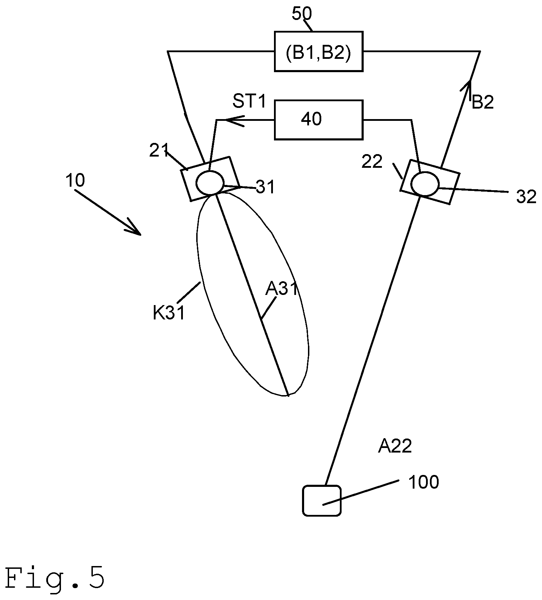

Bei Aufnahme eines zweiten Bildes B2 mit der zweiten Kameraeinheit 22 wird die Steuereinrichtung 40 genau umgekehrt verfahren (siehe Figur 5) und mit einem Steuersignal ST1 die erste Beleuchtungseinheit 31 aktivieren und mit dieser das aufzunehmende Objekt 100 beleuchten.

Die von den beiden Kameraeinheiten 21 und 22 aufgenommenen Bilder B1 und B2 bilden jeweils ein Bilderpaar, das von der Bildauswertungseinrichtung 50 im Rahmen bekannter herkömmlicher stereoskopischer Bildauswertungsverfahren ausgewertet wird, wobei beispielsweise eine dreidimensionale Tiefenkarte der Objekte 100 erzeugt werden kann und/oder gezielt der Abstand bestimmter Objekte oder Objektabschnitte zur Kamera 10 ermittelt werden kann.

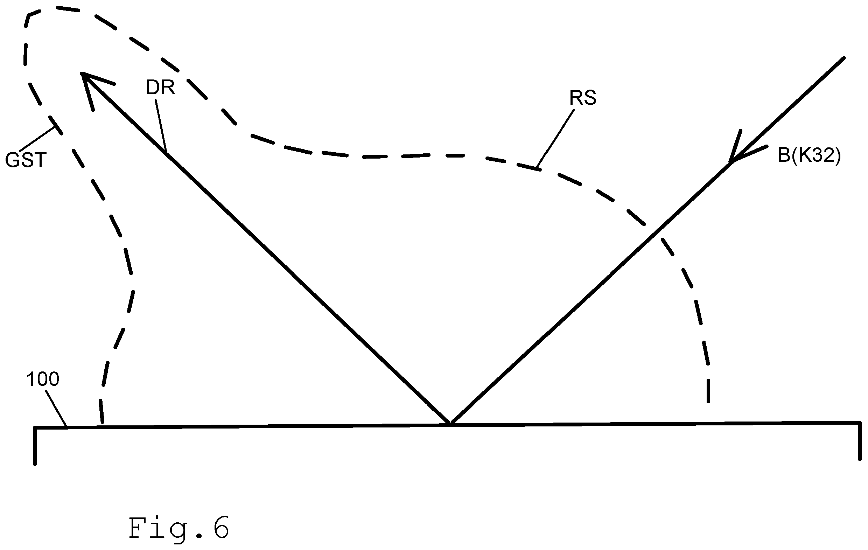

Die Figur 6 zeigt den vorteilhaften Effekt der im Zusammenhang mit den Figuren 1 bis 5 näher beschriebenen Anordnung der optischen Achsen A21 und A22 relativ zu den Keulenachsen K31 und K32 der beiden Beleuchtungseinheiten 31 und 32 am Beispiel der Beleuchtung B(K32) durch die Hauptstrahlkeule K32 der zweiten Beleuchtungseinheit 32 bei der Aufnahme des ersten Bildes B1 näher im Detail. Man erkennt eine diffuse Rückstreuung RS der Beleuchtung und einen auf direkter Reflexion beruhenden Direktreflex DR, die sich zu einer Gesamtrückstrahlung GST überlagern; der Direktreflex DR kann aufgrund seiner großen Intensität im ersten Bild B1 in einem korrespondierenden Bildabschnitt zu einer Überbelichtung führen.

Aufgrund der beschriebenen Ausrichtung der optischen Achsen A21 und A22 relativ zu den Keulenachsen A31 und A32 wird bei der Aufnahme des zweiten Bildes B2 seitens der zweiten Kameraeinheit 22 ein entsprechender Direktreflex von der Beleuchtung der ersten Beleuchtungseinheit 31 im zweiten Bild B2 hervorgerufen werden, und zwar - im Falle der gezeigten Ausrichtung der Beleuchtungseinheiten und der gezeigten Ausrichtung des spiegelnden Abschnitts des Bildobjektes 100 - in demselben Bildabschnitt wie beim ersten Bild B1.

Durch die beschriebene Anordnung der optischen Achsen und der Keulenachsen relativ zueinander und die gegenläufige Ansteuerung der Beleuchtungs- und Kameraeinheiten lässt sich in vielen Fällen erreichen, dass Direktreflexe DR an Oberflächenabschnitten von aufzunehmenden Objekten 100 bei beiden Bildern B1 und B2 eines Bilderpaares an denselben Bildabschnitten auftreten, also nicht an unterschiedlichen Bildabschnitten, sodass der Verlust an - mit Blick auf die stereoskopische Auswertung - auswertbaren Bildinformationen in dem durch die zwei Bilder B1 und B2 gebildeten Bilderpaar quasi halbiert oder aber zumindest signifikant reduziert werden kann; der Verlust an Bildinformation beruht darauf, dass Direktreflexe DR in betroffenen Bildabschnitten zu Überbelichtung führen oder führen können und diese Bildabschnitte für die Bildauswertung, insbesondere für eine Entfernungsmessung nicht berücksichtigt werden können, weil sie schlicht zu hell sind.

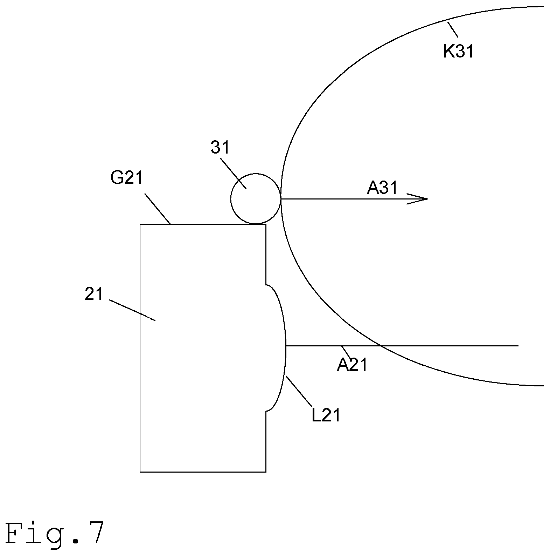

Die nachfolgenden Figuren zeigen verschiedene bevorzugte Anordnungen der Beleuchtungseinheiten relativ zu den Kameraeinheiten am Beispiel der ersten Kameraeinheit 21 und der ersten Beleuchtungseinheit 31 bei der stereoskopischen Kamera 10 gemäß den Figuren 1 bis 5 näher im Detail; die nachfolgenden Ausführungen gelten für die zweite Kameraeinheit 22 und die zweite Beleuchtungseinheit 32 entsprechend:
Bei dem Ausführungsbeispiel gemäß Figur 7, die eine schematische Seitenansicht zeigt, ist die erste Beleuchtungseinheit 31 an einem Gehäuse G21 der ersten Kameraeinheit 21 montiert. Die Keulenachse A31 der Hauptstrahlkeule K31 der ersten Beleuchtungseinheit 31 ist parallel zur optischen Achse A21 der ersten Kameraeinheit 21 angeordnet. Darüber hinaus erkennt man eine Ausgangslinse L21 der ersten Kameraeinheit 21.

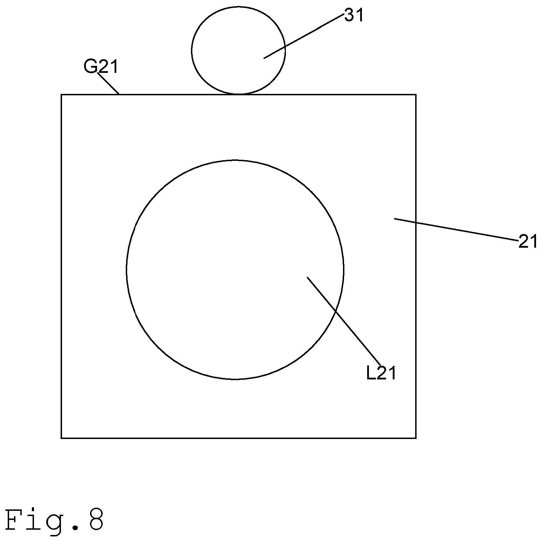

Die Figur 8 zeigt das Ausführungsbeispiel gemäß Figur 7 in einer schematischen Draufsicht.

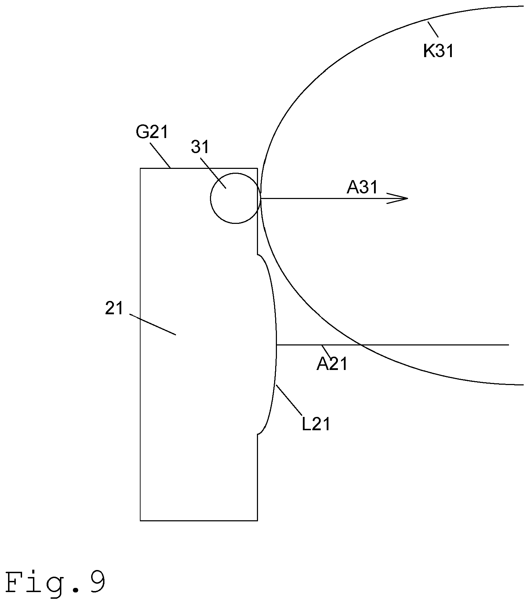

Die Figur 9 zeigt in einer schematischen Seitenansicht beispielhaft eine andere Anordnung der ersten Beleuchtungseinheit 31 relativ zur ersten Kameraeinheit 21. Bei dem Ausführungsbeispiel gemäß Figur 9 ist die erste Beleuchtungseinheit 31 innerhalb des Gehäuses G21 der ersten Kameraeinheit 21 montiert. Die Keulenachse A31 ist auch hier parallel und beabstandet zu der optischen Achse A21 der Kameraeinheit 21 angeordnet.

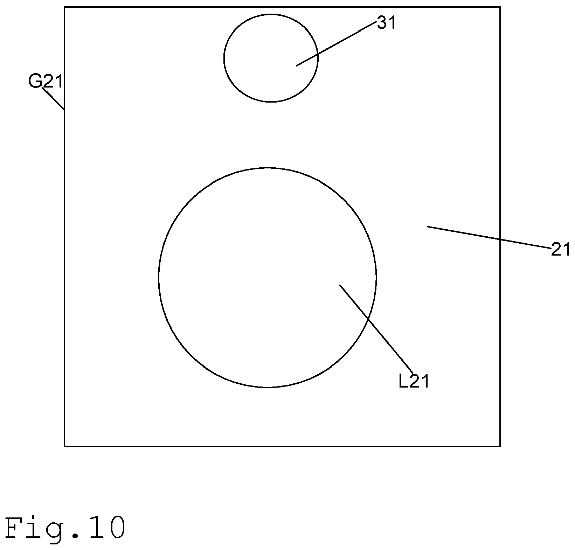

Die Figur 10 zeigt das Ausführungsbeispiel gemäß Figur 9 in einer schematischen Draufsicht.

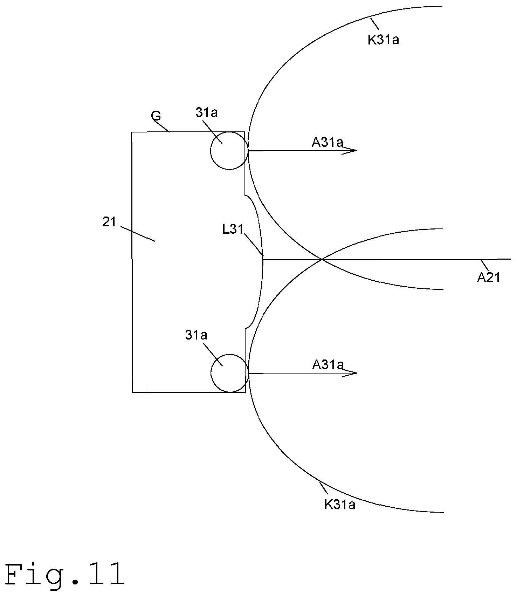

Die Figur 11 zeigt in einer schematischen Seitenansicht ein Ausführungsbeispiel für eine erste Beleuchtungseinheit 31, die mehrere Subbeleuchtungseinheiten 31a umfasst, die gemeinsam die erste Beleuchtungseinheit 31 bilden. Die Anordnung der Subbeleuchtungseinheiten ist derart gewählt, dass deren Keulenachsen A31a jeweils parallel zur optischen Achse A21 der Kameraeinheit 21 angeordnet sind.

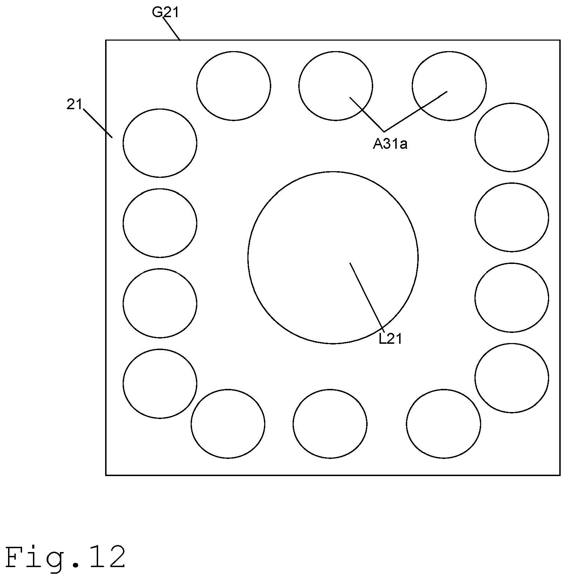

Die Figur 12 zeigt das Ausführungsbeispiel gemäß Figur 11 in einer schematischen Draufsicht. Es lässt sich erkennen, dass die Subbeleuchtungseinheiten 31a vorzugsweise ringförmig um die Ausgangslinse der Kameraeinheit 21 angeordnet sind.

Bei dem Ausführungsbeispiel gemäß den Figuren 11 und 12 sind die Subbeleuchtungseinheiten 31a innerhalb des Gehäuses G21 der ersten Kameraeinheit 21 angeordnet; alternativ können diese auch außerhalb des Gehäuses G21 angeordnet sein, wie dies im Zusammenhang mit den Figuren 7 und 8 näher erläutert worden ist.

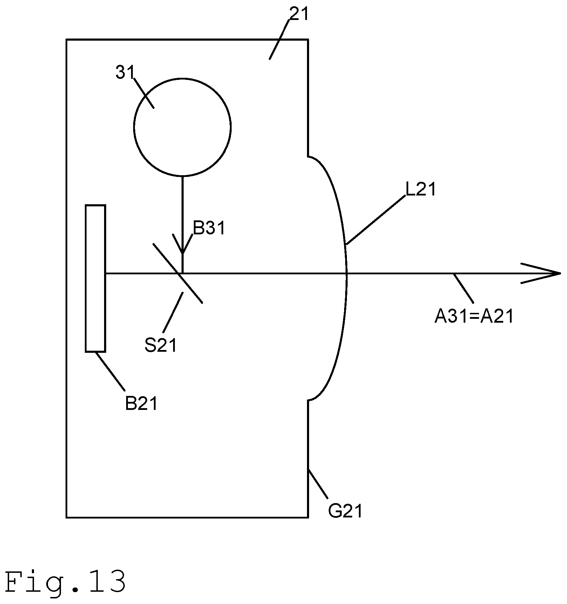

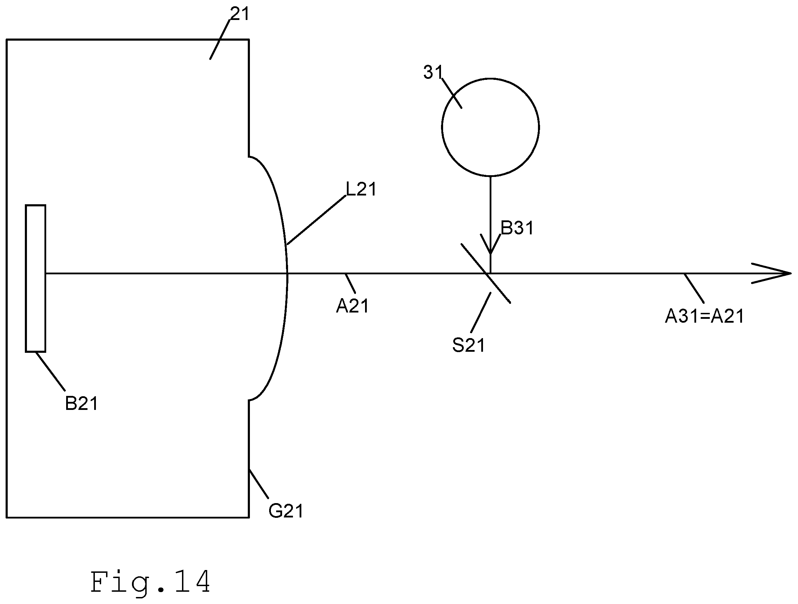

Bei den Ausführungsbeispielen gemäß den Figuren 7 bis 12 sind die Keulenachsen A31 der ersten Beleuchtungseinheit 31 stets parallel und beabstandet zur optischen Achse A21 der ersten Kameraeinheit 21 angeordnet. Alternativ ist es möglich, die Keulenachse A31 mit der optischen Achse A21 zusammenfallen zu lassen, sodass diese aufeinander liegen. Solche Ausführungsbeispiele sind näher in den Figuren 13 und 14 beispielhaft gezeigt.

In der Figur 13 sieht man in einer schematischen Seitenansicht eine Ausführungsvariante, bei der eine erste Beleuchtungseinheit 31 mit einem vorzugsweise halbtransparenten Spiegel S21 zusammenwirkt, der im Bereich der optischen Achse A21 angeordnet ist und bei dem Ausführungsbeispiel gemäß Figur 13 zwischen der Ausgangslinse L21 und einer Bildaufnahmeeinrichtung B21 der ersten Kameraeinheit 21 angeordnet ist. Wird die Beleuchtungseinheit 31 aktiviert, so fällt ihre Strahlung B31 auf den Spiegel S21 und wird von diesem in die optische Achse A21 gespiegelt, sodass die Keulenachse A31 mit der optischen Achse A21 zusammenfällt.

Die Figur 14 zeigt in einer schematischen Seitenansicht eine andere Variante, bei der die optische Achse A21 und die Keulenachse A31 zusammenfallen. Bei dem Ausführungsbeispiel gemäß Figur 14 ist die erste Beleuchtungseinheit 31 außerhalb des Gehäuses G21 der ersten Kameraeinheit 21 angeordnet, und zwar gemeinsam mit dem Spiegel S21, der ebenfalls außerhalb des Gehäuses G21 angeordnet ist. Der Spiegel S21 befindet sich auf der optischen Achse A21 der ersten Kameraeinheit 21 und spiegelt Beleuchtung B31 bzw. Strahlung der ersten Beleuchtungseinheit 31 in die optische Achse A21, sodass die Keulenachse A31 mit der optischen Achse A21 zusammenfällt, wie dies auch bei dem Ausführungsbeispiel gemäß Figur 13 der Fall ist.

Obwohl die Erfindung im Detail durch bevorzugte Ausführungsbeispiele näher illustriert und beschrieben wurde, so ist die Erfindung nicht durch die offenbarten Beispiele eingeschränkt. Der Schutzumfang der Erfindung ist durch die Ansprüche definiert.

### Bezugszeichenliste

- 10: stereoskopische Kamera
- 21: erste Kameraeinheit
- 22: zweite Kameraeinheit
- 31: erste Beleuchtungseinheit
- 31a: Subbeleuchtungseinheit
- 32: zweite Beleuchtungseinheit
- 40: Steuereinrichtung
- 50: Bildauswertungseinrichtung
- 100: Bildobjekt
- A21: kameraeigene optische Achse
- A22: kameraeigene optische Achse
- A31: Keulenachse
- A31a: Keulenachse
- A32: Keulenachse
- B1: Bild
- B2: Bild
- B21: Bildaufnahmeeinrichtung
- B31: Strahlung
- D: Abstand
- DR: Direktreflex
- G21: Gehäuse
- GST: Gesamtrückstrahlung
- K31: Hauptstrahlkeule
- K32: Hauptstrahlkeule
- L21: Ausgangslinse
- RS: Rückstreuung
- S21: Spiegel
- ST1: Steuersignal
- ST2: Steuersignal

## Patentansprüche

1. Stereoskopische Kamera (10) mit zumindest zwei Kameraeinheiten (21, 22), die jeweils entlang einer kamerareigenen optischen Achse (A21, A22) ausgerichtet sind und einer Beleuchtungseinrichtung zur Beleuchtung zu fotografierender Objekte (100),
wobei
- einer ersten der zumindest zwei Kameraeinheiten (21) eine erste Beleuchtungseinheit (31) der Beleuchtungseinrichtung zugeordnet ist, wobei sich die Strahlung, insbesondere die Strahlung der Hauptstrahlkeule (K31), der ersten Beleuchtungseinheit (31) mit der optischen Achse (A21) der ersten Kameraeinheit (21) überlappt, und
- einer zweiten der zumindest zwei Kameraeinheiten (22) eine zweite Beleuchtungseinheit (32) der Beleuchtungseinrichtung zugeordnet ist, wobei sich die Strahlung, insbesondere die Strahlung der Hauptstrahlkeule (K32), der zweiten Beleuchtungseinheit (32) mit der optischen Achse (A22) der zweiten Kameraeinheit (22) überlappt, und
- eine Steuereinrichtung (40) vorhanden ist, die bei Aufnahme eines Bildes (B1) mit der ersten Kameraeinheit (21) die zweite Beleuchtungseinheit (32) aktiviert und die erste Beleuchtungseinheit (31) deaktiviert oder deaktiviert lässt und bei Aufnahme eines Bildes (B2) mit der zweiten Kameraeinheit (22) die erste Beleuchtungseinheit (31) aktiviert und die zweite Beleuchtungseinheit (32) deaktiviert oder deaktiviert lässt, wobei
die Kamera (10) eine Bildauswertungseinrichtung (50) aufweist, die mit dem von den Kameraeinheiten (21, 22) erzeugten Bildpaar (B1, B2), eine dreidimensionale Tiefenkarte und/oder Abstandsmesswerte zu Objekten (100) oder Objektabschnitten erzeugt, **dadurch gekennzeichnet, dass** dies unter Ausschluss von Bildabschnitten des Bildpaars erfolgt, die auf reflektierter Strahlung der Beleuchtungseinheiten beruhende Direktreflexe (DR) aufweisen.

2. Kamera (10) nach Anspruch 1,
**dadurch gekennzeichnet, dass**
die Steuereinrichtung (40) derart ausgestaltet ist, dass sie Bilderpaare (B1, B2) erzeugt, die jeweils ein erstes Bild (B1) und ein zweites Bild (B2) umfassen,
- wobei die Steuereinrichtung (40) bei Aufnahme des ersten Bildes (B1) jedes Bilderpaares (B1, B2) die erste Kameraeinheit (21) und die zweite Beleuchtungseinheit (32) aktiviert und die erste Beleuchtungseinheit (31) deaktiviert oder deaktiviert lässt und bei Aufnahme des zweiten Bildes (B2) des Bilderpaares (B1, B2) die zweite Kameraeinheit (22) und die erste Beleuchtungseinheit (31) aktiviert und die zweite Beleuchtungseinheit (32) deaktiviert oder deaktiviert lässt.

3. Kamera (10) nach einem der voranstehenden Ansprüche,
**dadurch gekennzeichnet, dass**
- die Achse (A31) der Hauptstrahlkeule (K31) der ersten Beleuchtungseinheit (31) parallel, oder zumindest näherungsweise parallel mit einem Fehlwinkel von maximal 10°, zur optischen Achse (A21) der ersten Kameraeinheit (21) ausgerichtet ist, und
- die Achse (A32) der Hauptstrahlkeule (K32) der zweiten Beleuchtungseinheit (32) parallel, oder zumindest näherungsweise parallel mit einem Fehlwinkel von maximal 10°, zur optischen Achse (A22) der zweiten Kameraeinheit (22) ausgerichtet ist.

4. Kamera (10) nach einem der voranstehenden Ansprüche,
**dadurch gekennzeichnet, dass**
- der Abstand zwischen der ersten Beleuchtungseinheit (31) und der ersten Kameraeinheit (21) kleiner ist als der Abstand zwischen der ersten Beleuchtungseinheit (31) und der zweiten Kameraeinheit (22) und
- der Abstand zwischen der zweiten Beleuchtungseinheit (32) und der zweiten Kameraeinheit (22) kleiner ist als der Abstand zwischen der zweiten Beleuchtungseinheit (32) und der ersten Kameraeinheit (21).

5. Kamera (10) nach einem der voranstehenden Ansprüche,
**dadurch gekennzeichnet, dass**
- die erste Beleuchtungseinheit (31) außen an oder innerhalb der ersten Kameraeinheit (21) montiert ist und die Achse (A31) der Hauptstrahlkeule (K31) der ersten Beleuchtungseinheit (31) parallel zur optischen Achse (A21) der ersten Kameraeinheit (21) ausgerichtet ist, und
- die zweite Beleuchtungseinheit (32) außen an oder innerhalb der zweiten Kameraeinheit (22) montiert ist und die Achse (A22) der Hauptstrahlkeule (K32) der zweiten Beleuchtungseinheit (32) parallel zur optischen Achse (A22) der zweiten Kameraeinheit (22) ausgerichtet ist.

6. Kamera (10) nach einem der voranstehenden Ansprüche,
**dadurch gekennzeichnet, dass**
- die Achse (A31) der Hauptstrahlkeule (K31) der ersten Beleuchtungseinheit (31) mit der optischen Achse (A21) der ersten Kameraeinheit (21) zusammenfällt, und
- die Achse (A32) der Hauptstrahlkeule (K32) der zweiten Beleuchtungseinheit (32) mit der optischen Achse (A22) der zweiten Kameraeinheit (22) zusammenfällt.

7. Kamera (10) nach einem der voranstehenden Ansprüche,
**dadurch gekennzeichnet, dass**
- die Kamera einen ersten Spiegel (S21) aufweist, der die Strahlung der ersten Beleuchtungseinheit (31) durch eine Ausgangslinse (L21) der ersten Kameraeinheit (21) leitet, wenn die Steuereinrichtung (40) eine Bildaufnahme mit der zweiten Kameraeinheit (22) auslöst, und/oder in die optische Achse (A21) der ersten Kameraeinheit (21) hineinspiegelt, wenn die Steuereinrichtung (40) eine Bildaufnahme mit der zweiten Kameraeinheit (22) auslöst, und
- die Kamera einen zweiten Spiegel aufweist, der die Strahlung der zweiten Beleuchtungseinheit (32) durch eine Ausgangslinse der zweiten Kameraeinheit (22) leitet, wenn die Steuereinrichtung (40) eine Bildaufnahme mit der ersten Kameraeinheit (21) auslöst, und/oder in die optische Achse (A22) der zweiten Kameraeinheit (22) hineinspiegelt, wenn die Steuereinrichtung (40) eine Bildaufnahme mit der ersten Kameraeinheit (21) auslöst.

8. Kamera (10) nach einem der voranstehenden Ansprüche,
**dadurch gekennzeichnet, dass**
die Kamera (10) eine Bildauswertungseinrichtung (50) aufweist, die mit den von den Kameraeinheiten (21, 22) erzeugten Bildern, insbesondere Bilderpaaren, eine dreidimensionale Tiefenkarte und/oder Abstandsmesswerte zu Objekten (100) oder Objektabschnitten erzeugt.

9. Kamera (10) nach einem der voranstehenden Ansprüche,
**dadurch gekennzeichnet, dass**
zusätzlich zu der ersten und zweiten Kameraeinheit (21) ein oder mehr weitere Kameraeinheiten vorhanden sind, denen jeweils eine Beleuchtungseinheit der Beleuchtungseinrichtung zugeordnet ist, wobei sich die Strahlung, insbesondere die Strahlung der Hauptstrahlkeule, der weiteren Beleuchtungseinheiten jeweils mit der optischen Achse der zugeordneten weiteren Kameraeinheit überlappt.

10. Kamera (10) nach einem der voranstehenden Ansprüche,
**dadurch gekennzeichnet, dass**
die Steuereinrichtung (40) durch Ansteuerung der Kameraeinheiten (21, 22) und Beleuchtungseinheiten Bilderpaare (B1, B2) erzeugt, die jeweils ein erstes Bild (B1) und ein zweites Bild (B2) umfassen, wobei
- das erste Bild (B1) jedes Bilderpaares (B1, B2) mit einer der Kameraeinheiten (21) bei Beleuchtung durch eine einer anderen Kameraeinheit (22) zugeordneten Beleuchtungseinheit (32) erzeugt wird und
- das zweite Bild (B2) mit der letztgenannten anderen Kameraeinheit (22) bei Beleuchtung mit derjenigen Beleuchtungseinheit (31), die der Kameraeinheit (21), mit der das erste Bild (B1) des Bilderpaares (B1, B2) erzeugt wurde, zugeordnet ist, erzeugt wird.

11. Verfahren zum Erzeugen stereoskopischer Bilder, bei dem mit zumindest zwei Kameraeinheiten (21, 22), die jeweils entlang einer kameraeigenen optischen Achse (A21, A22) ausgerichtet sind, Bilder (B1, B2) erzeugt werden und mit einer Beleuchtungseinrichtung zu fotografierende Objekte (100) beleuchtet werden, wobei
- einer ersten der zumindest zwei Kameraeinheiten (21, 22) eine erste Beleuchtungseinheit (31) der Beleuchtungseinrichtung zugeordnet ist, wobei sich die Strahlung, insbesondere die Strahlung der Hauptstrahlkeule (K31) der ersten Beleuchtungseinheit (31) mit der optischen Achse (A21) der ersten Kameraeinheit (21) überlappt, und
- einer zweiten der zumindest zwei Kameraeinheiten (21, 22) eine zweite Beleuchtungseinheit (32) der Beleuchtungseinrichtung zugeordnet ist, wobei sich die Strahlung, insbesondere die Strahlung der Hauptstrahlkeule (K32) der zweiten Beleuchtungseinheit (32) mit der optischen Achse ( A22) der zweiten Kameraeinheit (22) überlappt, und
- bei Aufnahme eines Bildes (B1) mit der ersten Kameraeinheit (21) die zweite Beleuchtungseinheit (32) aktiviert und die erste Beleuchtungseinheit (31) deaktiviert oder deaktiviert gelassen wird und
- bei Aufnahme eines Bildes (B2) mit der zweiten Kameraeinheit (22) die erste Beleuchtungseinheit (31) aktiviert und die zweite Beleuchtungseinheit (32) deaktiviert oder deaktiviert gelassen wird,
wobei mit dem von den Kameraeinheiten (21, 22) erzeugten Bildpaar (B1, B2) eine dreidimensionale Tiefenkarte und/oder Abstandsmesswerte zu Objekten (100) oder Objektabschnitten erzeugt werden,
**dadurch gekennzeichnet, dass** dies unter Ausschluss von Bildabschnitten des Bildpaars erfolgt, die auf reflektierter Strahlung der Beleuchtungseinheiten beruhende Direktreflexe aufweisen.

## Claims

1. Stereoscopic camera (10) having at least two camera units (21, 22), each aligned along an intrinsic optical axis (A21, A22) of the camera, and an illumination device for illuminating objects to be photographed (100),
wherein
- a first of the at least two camera units (21) is assigned a first illumination unit (31) of the illumination device, with the radiation, in particular the radiation of the main beam (K31), of the first illumination unit (31) overlapping with the optical axis (A21) of the first camera unit (21), and
- a second of the at least two camera units (22) is assigned a second illumination unit (32) of the illumination device, with the radiation, in particular the radiation of the main beam (K32), of the second illumination unit (32) overlapping with the optical axis (A22) of the second camera unit (22), and
- a control device (40) is present and it activates the second illumination unit (32) and deactivates the first illumination unit (31), or leaves the latter deactivated, when a picture (B1) is taken by the first camera unit (21) and activates the first illumination unit (31) and deactivates the second illumination unit (32), or leaves the latter deactivated, when a picture (B2) is taken by the second camera unit (22), wherein
the camera (10) comprises a picture evaluation device (50), which using the pair of pictures (B1, B2) created by the camera units (21, 22) creates a three-dimensional depth map and/or distance measurement values to objects (100) or object sections, **characterized in that** this is implemented excluding picture sections of the pair of pictures having direct reflections (DR) that are based on reflected illumination unit radiation.

2. Camera (10) according to Claim 1,
**characterized in that**
the control device (40) is configured such that it creates pairs of pictures (B1, B2), with each pair comprising a first picture (B1) and a second picture (B2),
- wherein the control device (40) activates the first camera unit (21) and the second illumination unit (32) and deactivates the first illumination unit (31), or leaves the latter deactivated, when the first picture (B1) of each pair of pictures (B1, B2) is taken and activates the second camera unit (22) and the first illumination unit (31) and deactivates the second illumination unit (32), or leaves the latter deactivated, when the second picture (B2) of the pair of pictures (B1, B2) is taken.

3. Camera (10) according to either of the preceding claims,
**characterized in that**
- the axis (A31) of the main beam (K31) of the first illumination unit (31) is parallel to the optical axis (A21) of the first camera unit (21) or at least approximately parallel thereto with a maximum error angle of 10°, and
- the axis (A32) of the main beam (K32) of the second illumination unit (32) is parallel to the optical axis (A22) of the second camera unit (22) or at least approximately parallel thereto with a maximum error angle of 10°.

4. Camera (10) according to any of the preceding claims,
**characterized in that**
- the distance between the first illumination unit (31) and the first camera unit (21) is smaller than the distance between the first illumination unit (31) and the second camera unit (22) and
- the distance between the second illumination unit (32) and the second camera unit (22) is smaller than the distance between the second illumination unit (32) and the first camera unit (21).

5. Camera (10) according to any of the preceding claims,
**characterized in that**
- the first illumination unit (31) is mounted externally on or within the first camera unit (21), and the axis (A31) of the main beam (K31) of the first illumination unit (31) is aligned parallel to the optical axis (A21) of the first camera unit (21), and
- the second illumination unit (32) is mounted externally on or within the second camera unit (22), and the axis (A22) of the main beam (K32) of the second illumination unit (32) is aligned parallel to the optical axis (A22) of the second camera unit (22).

6. Camera (10) according to any of the preceding claims,
**characterized in that**
- the axis (A31) of the main beam (K31) of the first illumination unit (31) coincides with the optical axis (A21) of the first camera unit (21), and
- the axis (A32) of the main beam (K32) of the second illumination unit (32) coincides with the optical axis (A22) of the second camera unit (22).

7. Camera (10) according to any of the preceding claims,
**characterized in that**
- the camera comprises a first mirror (S21) which guides the radiation of the first illumination unit (31) through an exit lens (L21) of the first camera unit (21) when the control device (40) triggers the taking of a picture with the second camera unit (22) and/or reflects said radiation onto the optical axis (A21) of the first camera unit (21) when the control device (40) triggers the taking of a picture with the second camera unit (22), and
- the camera comprises a second mirror which guides the radiation of the second illumination unit (32) through an exit lens of the second camera unit (22) when the control device (40) triggers the taking of a picture with the first camera unit (21) and/or reflects said radiation onto the optical axis (A22) of the second camera unit (22) when the control device (40) triggers the taking of a picture with the first camera unit (21).

8. Camera (10) according to any of the preceding claims,
**characterized in that**
the camera (10) comprises a picture evaluation device (50) which creates a three-dimensional depth map and/or distance measurement values to objects (100) or object sections using the pictures, in particular the pairs of pictures, created by the camera units (21, 22).

9. Camera (10) according to any of the preceding claims,
**characterized in that**
in addition to the first and second camera unit (21), one or more further camera units are present and are each assigned an illumination unit of the illumination device, with the radiation, in particular the radiation of the main beam, of the further illumination units overlapping with the respective optical axis of the assigned further camera unit.

10. Camera (10) according to any of the preceding claims,
**characterized in that**
the control device (40) creates pairs of pictures (B1, B2) by controlling the camera units (21, 22) and illumination units, with each pair comprising a first picture (B1) and a second picture (B2), wherein
- the first picture (B1) of each pair of pictures (B1, B2) is created by one of the camera units (21) under illumination provided by an illumination unit (32) assigned to another camera unit (22), and
- the second picture (B2) is created by the last-mentioned other camera unit (22) under illumination provided by that illumination unit (31) which is assigned to the camera unit (21) used to create the first picture (B1) of the pair of pictures (B1, B2).

11. Method for creating stereoscopic pictures, wherein pictures (B1, B2) are created by at least two camera units (21, 22), each aligned along an intrinsic optical axis (A21, A22) of the camera, and objects (100) to be photographed are illuminated by an illumination device, wherein
- a first of the at least two camera units (21, 22) is assigned a first illumination unit (31) of the illumination device, with the radiation, in particular the radiation of the main beam (K31), of the first illumination unit (31) overlapping with the optical axis (A21) of the first camera unit (21), and
- a second of the at least two camera units (21, 22) is assigned a second illumination unit (32) of the illumination device, with the radiation, in particular the radiation of the main beam (K32), of the second illumination unit (32) overlapping with the optical axis (A22) of the second camera unit (22), and
- when a picture (B1) is taken by the first camera unit (21), the second illumination unit (32) is activated and the first illumination unit (31) is deactivated or left deactivated, and
- when a picture (B2) is taken by the second camera unit (22), the first illumination unit (31) is activated and the second illumination unit (32) is deactivated or left deactivated,
wherein, using the pair of pictures (B1, B2) created by the camera units (21, 22), a three-dimensional depth map and/or distance measurement values to objects (100) or object sections are created, **characterized in that** this is implemented excluding picture sections of the pair of pictures having direct reflections that are based on reflected illumination unit radiation.

## Revendications

1. Caméra stéréoscopique (10) comprenant au moins deux unités de caméra (21, 22) qui sont respectivement orientées le long d'un axe optique propre à la caméra (A21, A22) et un dispositif d'éclairage pour éclairer des objets à photographier (100),
dans laquelle
- une première unité d'éclairage (31) du dispositif d'éclairage est associée à une première des au moins deux unités de caméra (21), le rayonnement, en particulier le rayonnement du lobe principal (K31), de la première unité d'éclairage (31) se superposant à l'axe optique (A21) de la première unité de caméra (21), et
- une deuxième unité d'éclairage (32) du dispositif d'éclairage est associée à une deuxième des au moins deux unités de caméra (22), le rayonnement, en particulier le rayonnement du lobe principal (K32), de la deuxième unité d'éclairage (32) se superposant à l'axe optique (A22) de la deuxième unité de caméra (22), et
- il est prévu un dispositif de commande (40) qui, lors de l'acquisition d'une image (B1) par la première unité de caméra (21), active la deuxième unité d'éclairage (32) et désactive ou laisse désactivée la première unité d'éclairage (31) et, lors de l'acquisition d'une image (B2) par la deuxième unité de caméra (22), active la première unité d'éclairage (31) et désactive ou laisse désactivée la deuxième unité d'éclairage (32), la caméra (10) comporte un dispositif d'évaluation d'image (50) qui, à partir de la paire d'images (B1, B2) générée par les unités de caméra (21, 22), génère une carte de profondeur tridimensionnelle et/ou des valeurs de mesure de distance par rapport à des objets (100) ou des parties d'objets, **caractérisée en ce que** cela s'effectue en excluant des parties d'image de la paire d'images qui présentent des reflets directs (DR) dus à la réflexion du rayonnement provenant des unités d'éclairage.

2. Caméra (10) selon la revendication 1,
**caractérisée en ce que**
le dispositif de commande (40) est conçu de manière à générer des paires d'images (B1, B2) qui comprennent chacune une première image (B1) et une deuxième image (B2),
- le dispositif de commande (40), lors de l'acquisition de la première image (B1) de chaque paire d'images (B1, B2), active la première unité de caméra (21) et la deuxième unité d'éclairage (32) et désactive ou laisse désactivée la première unité d'éclairage (31) et, lors de l'acquisition de la deuxième image (B2) de la paire d'images (B1, B2), active la deuxième unité de caméra (22) et la première unité d'éclairage (31) et désactive ou laisse désactivée la deuxième unité d'éclairage (32).

3. Caméra (10) selon l'une des revendications précédentes,
**caractérisée en ce que**
- l'axe (A31) du lobe principal (K31) de la première unité d'éclairage (31) est orienté parallèlement, ou au moins approximativement parallèlement, avec une erreur angulaire maximale de 10°, à l'axe optique (A21) de la première unité de caméra (21), et
- l'axe (A32) du lobe principal (K32) de la deuxième unité d'éclairage (32) est orienté parallèlement, ou au moins approximativement parallèlement, avec une erreur angulaire maximale de 10°, à l'axe optique (A22) de la deuxième unité de caméra (22).

4. Caméra (10) selon l'une des revendications précédentes,
**caractérisée en ce que**
- la distance entre la première unité d'éclairage (31) et la première unité de caméra (21) est inférieure à la distance entre la première unité d'éclairage (31) et la deuxième unité de caméra (22) et
- la distance entre la deuxième unité d'éclairage (32) et la deuxième unité de caméra (22) est inférieure à la distance entre la deuxième unité d'éclairage (32) et la première unité de caméra (21).

5. Caméra (10) selon l'une des revendications précédentes,
**caractérisée en ce que**
- la première unité d'éclairage (31) est montée à l'extérieur ou à l'intérieur de la première unité de caméra (21) et l'axe (A31) du faisceau principal (K31) de la première unité d'éclairage (31) est orienté parallèlement à l'axe optique (A21) de la première unité de caméra (21), et
- la deuxième unité d'éclairage (32) est montée à l'extérieur ou à l'intérieur de la deuxième unité de caméra (22) et l'axe (A22) du faisceau principal (K32) de la deuxième unité d'éclairage (32) est orienté parallèlement à l'axe optique (A22) de la deuxième unité de caméra (22).

6. Caméra (10) selon l'une des revendications précédentes,
**caractérisée en ce que**
- l'axe (A31) du lobe principal (K31) de la première unité d'éclairage (31) coïncide avec l'axe optique (A21) de la première unité de caméra (21), et
- l'axe (A32) du lobe principal (K32) de la deuxième unité d'éclairage (32) coïncide avec l'axe optique (A22) de la deuxième unité de caméra (22).

7. Caméra (10) selon l'une des revendications précédentes,
**caractérisée en ce que**
- la caméra comporte un premier miroir (S21) qui guide le rayonnement provenant de la première unité d'éclairage (31) à travers une lentille de sortie (L21) de la première unité de caméra (21) lorsque le dispositif de commande (40) déclenche une acquisition d'image au moyen de la deuxième unité de caméra (22), et/ou le réfléchit sur l'axe optique (A21) de la première unité de caméra (21) lorsque le dispositif de commande (40) déclenche une acquisition d'image au moyen de la deuxième unité de caméra (22), et
- la caméra comporte un deuxième miroir qui guide le rayonnement provenant de la deuxième unité d'éclairage (32) à travers une lentille de sortie de la deuxième unité de caméra (22) lorsque le dispositif de commande (40) déclenche une acquisition d'image au moyen de la première unité de caméra (21), et/ou le réfléchit sur l'axe optique (A22) de la deuxième unité de caméra (22) lorsque le dispositif de commande (40) déclenche une acquisition d'image au moyen de la première unité de caméra (21).

8. Caméra (10) selon l'une des revendications précédentes,
**caractérisée en ce que**
la caméra (10) comporte un dispositif d'évaluation d'images (50) qui, à partir des images générées par les unités de caméra (21, 22), en particulier des paires d'images, génère une carte de profondeur tridimensionnelle et/ou des valeurs de mesure de distance par rapport à des objets (100) ou des parties d'objets.

9. Caméra (10) selon l'une des revendications précédentes,
**caractérisée en ce que**,
outre les première et deuxième unités de caméra (21), il est prévu une ou plusieurs autres unités de caméra auxquelles est respectivement associée une unité d'éclairage du dispositif d'éclairage, le rayonnement, en particulier le rayonnement du lobe principal, des autres unités d'éclairage se superposant respectivement à l'axe optique de l'autre unité de caméra associée.

10. Caméra (10) selon l'une des revendications précédentes,
**caractérisée en ce que**
le dispositif de commande (40) génère, par commande des unités de caméra (21, 22) et des unités d'éclairage, des paires d'images (B1, B2) qui comprennent respectivement une première image (B1) et une deuxième image (B2), dans laquelle
- la première image (B1) de chaque paire d'images (B1, B2) est générée au moyen de l'une des unités de caméra (21) lors de l'éclairage par une unité d'éclairage (32) associée à une autre unité de caméra (22) et
- la deuxième image (B2) est générée au moyen de ladite autre unité de caméra (22) lors de l'éclairage par l'unité d'éclairage (31) qui est associée à l'unité de caméra (21) au moyen de laquelle la première image (B1) de la paire d'images (B1, B2) a été générée.

11. Procédé destiné à générer des images stéréoscopiques, dans lequel des images (B1, B2) sont générées au moyen d'au moins deux unités de caméra (21, 22) qui sont respectivement orientées le long d'un axe optique (A21, A22) propre à la caméra, et des objets (100) à photographier sont éclairés au moyen d'un dispositif d'éclairage, dans lequel
- une première unité d'éclairage (31) du dispositif d'éclairage est associée à une première des au moins deux unités de caméra (21, 22), le rayonnement, en particulier le rayonnement du lobe principal (K31), de la première unité d'éclairage (31) se superposant à l'axe optique (A21) de la première unité de caméra (21), et
- une deuxième unité d'éclairage (32) du dispositif d'éclairage est associée à une deuxième des au moins deux unités de caméra (21, 22), le rayonnement, en particulier le rayonnement du lobe principal (K32), de la deuxième unité d'éclairage (32) se superposant à l'axe optique (A22) de la deuxième unité de caméra (22), et
- lors de l'acquisition d'une image (B1) au moyen de la première unité de caméra (21), la deuxième unité d'éclairage (32) est activée et la première unité d'éclairage (31) est désactivée ou laissée désactivée, et
- lors de l'acquisition d'une image (B2) au moyen de la deuxième unité de caméra (22), la première unité d'éclairage (31) est activée et la deuxième unité d'éclairage (32) est désactivée ou laissée désactivée,
dans lequel une carte de profondeur tridimensionnelle et/ou des valeurs de mesure de distance par rapport à des objets (100) ou des parties d'objets sont générées à partir de la paire d'images (B1, B2) générée par les unités de caméra (21, 22), **caractérisé en ce que** cela s'effectue en excluant des parties d'image de la paire d'images qui présentent des reflets directs dus à la réflexion du rayonnement provenant des unités d'éclairage.
